# EUROPEAN PATENT APPLICATION

(11) **EP 4 089 457 A1**
(43) Date of publication of application: **16.11.2022**
(21) Application number: 21382426.1
(22) Date of filing: 10.05.2021
(51) Int. Cl.: G02B 6/44

(54) **MULTI-FIBER OPTICAL CABLE**

(71) Applicant: Prysmian S.p.A., 20126 Milano (IT)
(72) Inventor: PERA GONZALVEZ, Gerard, 08800 Vilanova i la Geltrú (ES); CHAPELET, Franck Pierre Michel, 89100 Paron (FR)
(74) Representative: Biallo, Dario

(57) **Abstract**

A multi-fiber optical cable (10) extending along a longitudinal direction and comprising a protecting sheath (11) that surrounds and contains at least two tubes (12) and reinforcing fibers (13) substantially parallel to the at least two tubes (12) and positioned among the at least two tubes (12) and an inner surface of the protecting sheath (11), wherein
- the reinforcing fibers (13) contained in the protecting sheath (11) have a linear density of from 700 to 7,000 dtex; and
- each one of the at least two tubes (12) contains a plurality of optical fibers (14) and a filling material (15) positioned among the optical fibers (14) and an inner surface of the the tube (12), said at least two tubes (12) being connected to each other through a connecting portion (17) which is frangible and which extends in the longitudinal direction.

## Description

### Background of the disclosure

The present disclosure refers to a multi-fiber optical cable, for example a multi-fiber push-on (MPO) optical cable.

Nowadays, the multi-fiber optical cable are commonly known for connecting to each other a plurality of users or devices that are positioned in the same data-center or in different and distant data-centers.

The multi-fiber optical cable can contain, for example, from 4 to 144 fibers and therefore they are capable of establishing multiple communication data channels. The multi-fiber optical cables typically comprise a plurality of tubes enclosed and arranged in a random manner inside a single sheath wherein each one of said tubes surrounds a plurality of optical fibers.

The multi-fiber optical cables need to be robust and to have a high tensile strenght in order to protect the optical fibers from breakage or damage; at the same time the multi-fiber optical cable must be flexible enough to be folded and adapted to the not always straight path in which they are to be installed.

Zip-cord optical cables are also known which typically comprise two or more optical fibers the protecting sheath of which are longitudinally connected to each other in such a way that they can be easily separated by manually pulling them apart. The zip-cord optical cables are typically used in order to keep the optical fibers ordered while maintaining close to each other the optical fibers that are aimed at transmitting related optical signals. This avoids confusion and reduces the potential risk of forming tangles of intricate optical fibers that can be exposed to damages.

However, the zip-cord optical cables may result fragile when they contains a plurality optical fibres and/or may provide a poor protection for the optical fibers contained therein. The provision of reinforcing elements could decrease the cable flexibility beside increasing the weight thereof.

Document US20020025127 refers to a sub-miniature duplex optical fiber cable wherein two optical fibers with respective buffers and aramid yarn layers are positioned side-by-side in a sheath covering and contacting the aramid yarn of both optical fibers.

In an embodiment, the duplex optical fiber cable includes two simplex optical fiber cables, but with the respective sheaths being formed such that they have a continuous connection between the two simplex optical fiber cables according to a zip-cord configuration.

In another embodiment, the duplex optical fiber cable includes two simplex optical fiber cables positioned side-by-side in a substantially parallel relationship. In this case, an oversheath is extruded to substantially surround and contact the two simplex optical fiber cables.

Document CN210401786 refers to a 24-fibers cable comprising two cable cores, each one of which comprises 12 optical fibers enclosed in an inner sheath and a filling layer filled between the optical fibres and the inner sheath. A protecting sleeve is provided on the outer side of the cable core and is filled with soft filler. The soft filler is provided with bending-resistant reinforcing ribs extending along the length direction of the cable core. The soft filler is rubber cord or heat-resistant insulating nylon. The bending-resistant ribs are made of reinforced plastic.

Document CN108181694 refers to a multi-core cable with a central reinforcing member made of metallic glass or phosphating steel wires, and a plurality of micro-tubes each one of which comprises a plurality of optical fibres. The micro-tubes are surrounded by an outer jacket forming a plurality of branches connected to the central reinforcing member and that can be detached from it. Each micro-tube has two lateral reinforcements positioned symmetrically and parallel with respect to the micro-tube and made of metallic glass or of phosphating steel wires.

### Summary of the disclosure

The Applicant faced the problem of providing a multi-fiber optical cable that is at the same time light, flexible, robust and capable of cointaining a plurality of optical fibers in an orderly manner.

The Applicant has thought to combine the structure of the multi-fiber optical cable with the zip-cord configuration in order to manage a plurality of optical fibres in a single cable in an orderly manner both during transport and deployment.

In particular, the Applicant has thought to realize two or more tubes cointaining a plurality of optical fibers and connected to each other according to the zip-cord configuration. In this way, thanks to the zip-cord configuration of the tubes, the resulting multi-fiber optical cable is capable of containing a plurality of optical fibers in an orderly manner.

The Applicant has found that reinforcing fibers, substantially parallel to the tubes inside a single protecting sheath, are kept well packed by the zip-cord configuration which avoids the reinforcing fibers to move inside the protecting sheath and to unevenly distribute within, thus creating and uneven protection (where the reinforcing fibers vacate) and potential bending problem (where the reinforcing fibers amass). Such a uniform packing of the reinforcing fibers allows skipping the use of reinforcing ribs or rods increasing the stiffness and/or decreasing the bending of the cable. Indeed, the reinforcing fibers confer strength to the cable while maintaining it flexible and light.

Therefore, according to a first aspect, the present disclosure relates to a multi-fiber optical cable extending along a longitudinal direction and comprising a protecting sheath that surrounds and cointains at least two tubes and reinforcing fibers substantially parallel to the at least two tubes and positioned among the at least two tubes and an inner surface of the protecting sheath, wherein
- the reinforcing fibers contained in the protecting sheath have a linear density of from 700 to 7,000 dtex; and
- each one of the at least two tubes cointains a plurality of optical fibers and a filling material positioned among the optical fibers and an inner surface of the tube, said at least two tubes being connected to each other through a connecting portion which is frangible and which extends in the longitudinal direction.

In the present description, as "linear density" (also known as "linear mass density" or "titer") it is meant the ratio mass/length of a fiber. It is herein expressed as dtex, i.e. grams/10,000 metres of a fiber.

In an embodiment the at least two tubes and the connecting portion are made as a single piece.

In an embodiment, the connecting portion is manually frangible.

In an embodiment each one of the at least two tubes has an internal surfaces that provides a substantially circular cross-section.

In an embodiment, the protecting sheath surrounds two tubes directly contacting them. This results in a multi-fiber optical cable according to the present disclosure having a substantially flat shape with rounded sides.

In an embodiment the multi-fiber optical cable comprises more than two tubes connected to each other by a connecting portion resulting in a flowerlike cross-section.

The multi-fiber optical cable of the present disclosure can cointain a large number of tubes, for example six, and therefore a very large number of optical fibers, for example 144, maintaining a compact size.

In an embodiment, the tubes of the cable according to the present disclosure have a wall thickness of from 0.25 mm to 1 mm, for example of 0.4 mm.

In an embodiment, the protecting sheath according to the present disclosure has a thickness of at least 0.5 mm, for example up to 2 mm. A greater thickness can be envisaged for specific applications.

In an embodiment the reinforcing fibers are made of polyamide or of glass fiber.

The reinforcing fibers provide the multi-fiber optical cable of the disclosure with a suitable tensile strength while avoiding to make such a cable as rigid and heavy. The tensile strength can range from 600 to 1,500 N.

In an embodiment the filling material is a gel. This embodiment is suitable when the multi-fiber optical cable of the disclosure is deployed along a path at least partially potentially exposed to moisture

In an embodiment the filling material is a dry one made, e.g., in form of fibers like polyamide fibers or fiberglass. In this case the filler material may optionally comprise hydroabsorbing material in form of fibers or powder. This embodiment is suitable when is deployed along a path substantially running within a building.

In an embodiment the protecting sheath and the at least two tubes are made of flame-retardant and halogen-free polymer mixtures, in the following referred to as low-smoke zero-halogen (LSOH) polymer mixtures. For example, such a polymer mixture can comprise a polyolefin like polyethylene and/or a polyester like ethylene vinyl acetate (EVA) as polymer base, and a flame retardant filler like aluminium or magnesium hydroxide.

In an embodiment, the protecting sheath and the at least two tubes are made of the same LSOH polymer mixture.

In an embodiment, the protecting sheath and the at least two tubes are made of two different LSOH polymer mixtures. In this case, the protecting sheath is made of a LSOH polymer mixture containing a lower amount of flame retardant filler than that contained in the LSOH mixture of the tubes.

For the purpose of the present description and of the claims that follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

Also, the terms "a" and "an" are employed to describe elements and components of the disclosure. This is done merely for convenience and to give a general sense of the disclosure. This description should be read to include one or at least one, and the singular also includes the plural unless it is obvious that it is meant otherwise.

The present disclosure, in at least one of the aforementioned aspects, can be implemented according to one or more of the present embodiments, optionally combined together.

### Brief description of the drawings

Further characteristics will be apparent from the detailed description given hereinafter with reference to the accompanying drawings, in which:
- Figure 1 is a schematic section view of the multi-fiber optical cable according to a first embodiment of the present disclosure;
- Figure 2 is a schematic section view of the multi-fiber optical cable according to a second embodiment of the present disclosure;
- Figure 3 is a schematic section view of the multi-fiber optical cable according to a third embodiment of the present disclosure.

### Detailed description of some embodiments

With reference to the figures, a multi-fiber optical cable 10 according to the present disclosure is schematically represented.

The multi-fiber optical cable 10 extends along a longitudinal direction and comprises a protecting sheath 11 that surrounds and cointains at least two tubes 12 and reinforcing fibers 13 substantially parallel to the at least two tubes 12. In particular, the reinforcing fibers 13 fill the space among the at least two tubes 12 and the protecting sheath 11.

Each one of the at least two tubes 12 cointains a plurality of optical fibers 14 and a filling material 15 among the optical fibers 14 and the inner surface 16a of the tubes 12.

For example, the optical fibers may be from 2 to 24 for each tube 12.

The at least two tubes 12 have external surfaces 16b and are connected to each other through a connecting portion 17.

In this way the external surfaces 16b of the tubes 12 and the external surfaces of the connecting portion 17 form a single common external surface.

The connecting portion 17 is frangible, for example manually, and extends along the cable longitudinal direction. Therefore, the tubes 12 can be easily separated by pulling them apart and breaking the connecting portion 17 for at least one length.

The at least two tubes 12 and the connecting portion 17 can be made as a single piece which can be extruded.

The tubes 12 can have any shape.

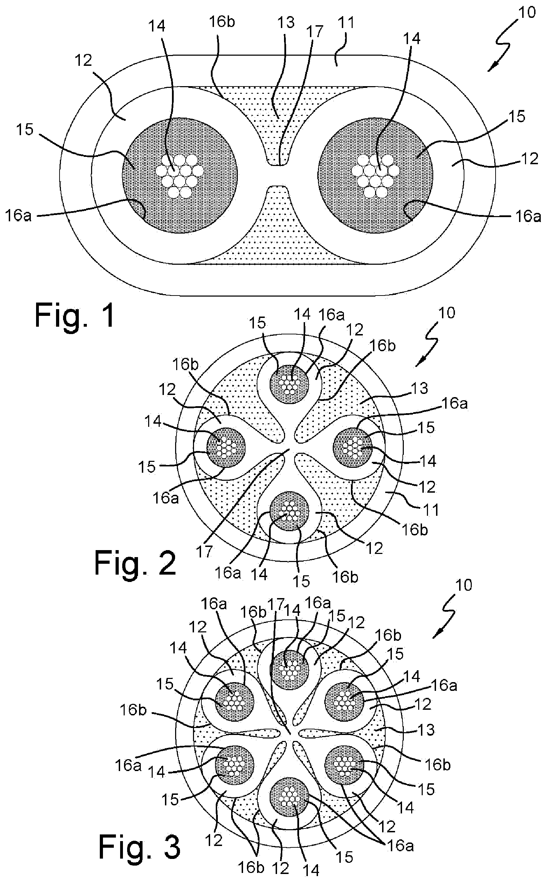

The inner surface 16a of each tube 12 can have substantially circular cross-section as depicted in figures 1-3.

As from Figure 1, the external surfaces 16 of the tubes 12 can have a substantially circular shape, as depicted in figure 1.

The connecting portion 17 may be a strip projecting from the tubes 12.

The protecting sheath 11 of the cable 10 of Figure 1 surrounds the tubes 12 and directly contact them. In this embodiment, the multi-fiber optical cable 10 a flat shape with rounded minor sides. The presence of the reinforcing fibers 13 packed among the tubes 12 and the internal surface of the protecting sheath 11 helps having substantially flat major sides.

As from Figures 2 and 3, the multi-fiber optical cable 10 can comprise more than two tubes 12 connected to each other by a connecting portion 17 according to a flowerlike configuration.

In the embodiment of figure 2, the multi-fiber optical cable 10 comprises four tubes 12 and in the embodiment of figure 3 the multi-fiber optical cable 10 comprises six tubes 12.

In the embodiments of figures 2 and 3 the external surfaces 16 of the tubes 12 can form a flowerlike cross-section. The connecting portion 17 results from the connection of strips projecting from the tubes 12 and joining altogether substantially at the cable center.

The connecting portion/s 17 may have an average thickness ranging from 0.2 to 0.8 mm, though this value greatly depends on the number of tubes 12 connected thereby.

In these embodiments, the protecting sheath 11 surrounds the plurality of tubes 12 and directly contacts them and, also thanks to the reinforcing fibers 13 packed among the tubes 12 and the internal surface of the protecting sheath 11, the multi-fiber optical cable 10 has a substantially circular cross-section.

The reinforcing fibers 13 can be made of polyamide, for example aramid, or of glass fiber.

The filling material 15 in the tubes 12 provides mechanical protection to the fibers 14 and, optionally, a water blocking function.

The filling material 15 can be in form of a gel capable of improving the mechanical strength of the tube and of preventing the potential penetration of the water up to the optical fibers.

Alternatively the filling material 15 can be a dry one in form, for example, of fibers made of polyamide or of glass fiber, and optionally comprising a fibrous or powdery hydroabsorbing material.

The protecting sheath 11 and the at least two tubes 12 are made of LSOH polymer mixtures. Suitable polymer mixtures for the protecting sheath and tubes according to the present disclosure may comprise, as polymeric base, a polyester like EVA and/or a polyolefin selected from low density polyethylene (LDPE), linear low density polyethylene (LLDPE), ethylene propylene rubber (EPR) and/or ethylene propylene diene rubber (EPDM). The polymeric mixture further comprises a flame retardant filler, for example an aluminium or magnesium hydroxide.

Suitable polymer mixtures for the protecting sheath and tubes according to the present disclosure may have a limiting oxygen index (LOI; the minimum concentration of oxygen, expressed as a percentage, that will support combustion of a polymer) greater than 40%.

The protecting sheath 11 and the tubes 12 can be made of the same LSOH polymer mixture or of two different LSOH polymer mixtures.

In an embodiment, the protecting sheath is made of an LSOH polymer mixtures having a LOI lower than that of the tubes.

## Claims

1. Multi-fiber optical cable (10) extending along a longitudinal direction and comprising a protecting sheath (11) that surrounds and cointains at least two tubes (12) and reinforcing fibers (13) substantially parallel to the at least two tubes (12) and positioned among the at least two tubes (12) and an inner surface of the protecting sheath (11), wherein
- the reinforcing fibers (13) contained in the protecting sheath (11) have a linear density of from 700 to 7,000 dtex; and
- each one of the at least two tubes (12) cointains a plurality of optical fibers (14) and a filling material (15) positioned among the optical fibers (14) and an inner surface of the the tube (12), said at least two tubes (12) being connected to each other through a connecting portion (17) which is frangible and which extends in the longitudinal direction.

2. Multi-fiber optical cable (10) according to claim 1, wherein the at least two tubes (12) and the connecting portion (17) are made as a single piece.

3. Multi-fiber optical cable (10) according to claim 1, wherein each one of the at least two tubes (12) has an internal surfaces that provides a substantially circular cross-section.

4. Multi-fiber optical cable (10) according to claim 1, wherein the protecting sheath (11) surrounds two tubes (12) directly contacting them and the multi-fiber optical cable (10) has a flat shape with rounded sides.

5. Multi-fiber optical cable (10) according to claim 1, comprising more than two tubes (12) connected to each other by a connecting portion (17 resulting in a flowerlike cross-section.

6. Multi-fiber optical cable (10) according to claim 1, wherein the tubes (12) have a wall thickness of from 0.25 mm to 1 mm.

7. Multi-fiber optical cable (10) according to claim 1, wherein the protecting sheath (11) has a thickness of at least 0.5 mm.

8. Multi-fiber optical cable (10) according to claim 1, wherein the reinforcing fibers (13) are made of polyamide or of glass fiber.

9. Multi-fiber optical cable (10) according to claim 1, wherein the filling material (15) is a gel.

10. Multi-fiber optical cable (10) according to claim 1, wherein the filling material (15) is a dry one.

11. Multi-fiber optical cable (10) according to claim 10, wherein the dry filling material (15) is made in form of fibers of polyamide or of fiberglass.

12. Multi-fiber optical cable (10) according to claim 10 wherein the dry filling material (15) cointains hydroabsorbing material in form of fibers or powders.

13. Multi-fiber optical cable (10) according to claim 1, wherein the protecting sheath (11) and the at least two tubes (12) are made of flame-retardant and halogen-free polymer mixtures.

14. Multi-fiber optical cable (10) according to claim 13, wherein the protecting sheath (11) and the at least two tubes (12) are made of two different flame-retardant and halogen-free polymer mixtures, the protecting sheath (11) being made of a flame-retardant and halogen-free polymer mixture containing a lower amount of flame retardant filler than that contained in the flame-retardant and halogen-free polymer mixture of the at least two tubes (12).
